(19) **Europäisches Patentamt**
**European Patent Office**
**Office européen des brevets**

(11) **EP 2 900 012 B1**

(12) **EUROPEAN PATENT SPECIFICATION**

(45) Date of publication and mention
of the grant of the patent:
**28.09.2016 Bulletin 2016/39**

(51) Int Cl.:
*H04W 28/16* (2009.01)    *H04L 5/00* (2006.01)
*H04W 72/00* (2009.01)    *H04L 1/18* (2006.01)
*H04W 72/12* (2009.01)

(21) Application number: **12886406.3**

(22) Date of filing: **09.10.2012**

(86) International application number:
**PCT/CN2012/082646**

(87) International publication number:
**WO 2014/056149 (17.04.2014 Gazette 2014/16)**

(54) **INTERFERENCE COORDINATION METHOD AND DEVICE**

VERFAHREN UND VORRICHTUNG ZUR INTERFERENZKOORDINIERUNG

PROCÉDÉ ET DISPOSITIF DE COORDINATION D'INTERFÉRENCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.07.2015 Bulletin 2015/31**

(73) Proprietor: **Huawei Technologies Co., Ltd.
Longgang District
Shenzhen, Guangdong 518129 (CN)**

(72) Inventors:
• **YAN, Zhiyu
Shenzhen
Guangdong 518129 (CN)**
• **XUE, Lixia
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
**WO-A1-2011/137383      CN-A- 101 917 367
CN-A- 102 026 361        CN-A- 102 158 964
CN-A- 102 281 648**

• **RESEARCH IN MOTION ET AL: "ICIC
consideration for EPDCCH", 3GPP DRAFT;
R1-124434 (RIM-ICIC FOR EPDCCH ), 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no. San Diego,
USA; 20121008 - 20121012 29 September 2012
(2012-09-29), XP050662326, Retrieved from the
Internet:
URL:http://www.3gpp.org/ftp/tsg_ran/WG1_RL
1/TSGR1_70b/Docs/ [retrieved on 2012-09-29]**

**Description**

**TECHNICAL FIELD**

The present invention relates to the field of communications technologies, and in particular, to a method and an apparatus for interference coordination.

**BACKGROUND**

A heterogeneous network defined in 3GPP LTE-A standards indicates a network formed by cells that use different power, and these cells include macro base stations macro eNBs, Pico micro cells, and so on.

In this network architecture, a terminal user needs to correctly demodulate scheduling information from a cell, and generally, the scheduling information is carried on a control channel of the cell, that is to say, a user needs to correctly demodulate the control channel from the cell, so as to ensure data communication with the cell. In a heterogeneous network, because a low-power cell is introduced, an interference scenario in the heterogeneous network is complex; for example, transmit power of a macro base station Macro eNB is 46 dBm, and transmit power of a Pico cell is only 30 dBm. Apparently, because a transmit power difference between the macro base station and the Pico cell is large, a UE served by the Pico cell may be interfered with by the macro base station. Particularly, when range expansion (range expansion) is used as a cell selection criteria to expand a service range of the Pico cell, a user equipment served by the Pico cell is subject to stronger interference from the macro base station. In this case, an interference signal from the macro base station may be even stronger than a usable signal from the Pico cell. For example, R1-124434 refers to ICIC consideration for EPDCCH.

Further, WO 2011/137383 A1 refers to a wireless transmit/receive unit (WTRU) that may operate in a heterogeneous wireless communication network (HetNet). The WTRU may detect the presence of an extended physical downlink control channel (E-PDCCH) and may decode a physical downlink control channel (PDCCH) upon detecting the E-PDCCH. The WTRU may obtain scheduling information of the E-PDCCH on a physical downlink shared control channel (PDSCH) from the decoded PDCCH. The WTRU may also determine control information for the WTRU from the E-PDCCH using the scheduling information of the E-PDCCH. The HetNet may further include a first eNB and a second eNB and the WTRU may receive the E-PDCCH from the first eNB and another E-PDCCH from the second eNB. The other E-PDCCH may be coordinated with the E-PDCCH such that the interference between the other E-PDCCH and the E-PDCCH from the perspective of the WTRU may be reduced relative to no coordination.

Therefore, in order to ensure that a user equipment in a heterogeneous network works properly, it needs to be considered how to avoid interference between a PDSCH (physical downlink shared channel, physical downlink shared channel) and an enhanced control channel in cells of different power, and mutual interference between an enhanced control channel and an enhanced control channel, where the enhanced control channel may include an E-PDCCH (enhanced physical downlink control channel, enhanced physical downlink control channel) and/or an E-PHICH (Enhanced-Physical Hybrid ARQ Indicator Channel, enhanced-physical hybrid ARQ indicator channel), so as to guarantee that a user equipment served by an interfered-with cell can reliably receive the enhanced control channel.

**SUMMARY**

Embodiments of the present invention provide a method and an apparatus for interference coordination, which can solve a problem that an enhanced control channel of a cell is interfered with by a neighboring cell, thereby ensuring performance of the enhanced control channel of each cell.

To achieve the foregoing objective, the embodiments of the present invention adopt the following technical solutions:

A method for interference coordination includes:

receiving enhanced-control-channel scheduling indication information sent by a neighboring cell, wherein the enhanced-control-channel scheduling indication information comprises scheduling indication information used for indicating transmit power information corresponding to each PRB in the neighboring cell; and

determining, according to the scheduling indication information, a relative narrowband transmit power value corresponding to each PRB in the neighboring cell and determining, according to the scheduling indication information, at least one relative narrowband transmit power threshold;

performing calculation according to the relative narrowband transmit power value corresponding to each PRB in the neighboring cell and the at least one relative narrowband transmit power threshold to obtain a transmit power value corresponding to each PRB in the neighboring cell; and

determining, according to preset anti-interference information and according to the transmit power value corresponding to each PRB in the neighboring cell, a PRB corresponding to an enhanced control channel of the cell, and determining the PRB corresponding to the enhanced control channel of the cell as a PRB, of which a scheduling manner needs to be adjusted, in the cell,

adjusting the scheduling manner of the PRB in the cell according to the enhanced-control-channel scheduling indication information.

An apparatus for interference coordination includes:

a receiving unit, configured to receive enhanced-control-channel scheduling indication information sent by a neighboring cell, wherein the enhanced-control-channel scheduling indication information comprises scheduling indication information, the scheduling indication information is used for indicating transmit power information corresponding to each PRB in the neighboring cell; and

an obtaining unit, configured to obtain a PRB in a cell; and

a first determining module, configured to: determine, according to the scheduling indication information, a relative narrowband transmit power value corresponding to each PRB in the neighboring cell and determining, according to the scheduling indication information, at least one relative narrowband transmit power threshold in the neighboring cell;

a calculating module, configured to perform calculation according to the relative narrowband transmit power value corresponding to each PRB in the neighboring cell and the at least one relative narrowband transmit power threshold in the neighboring cell to obtain a transmit power value corresponding to each PRB in the neighboring cell; and

a second determining module, configured to: determine, according to preset anti-interference information and according to the transmit power value corresponding to each PRB in the neighboring cell, a PRB corresponding to an enhanced control channel of the cell, and determine the PRB corresponding to the enhanced control channel of the cell as a PRB, of which a scheduling manner needs to be adjusted, in the cell,

wherein the apparatus further comprises an adjusting unit, configured to adjust the scheduling manner of the PRB in the cell according to the enhanced-control-channel scheduling indication information.

The embodiments of the present invention provide a method and an apparatus for interference coordination, where a cell sends enhanced-control-channel scheduling indication information to a neighboring cell, and the neighboring cell, after receiving the enhanced-control-channel scheduling indication information, adjusts scheduling of a PRB in the neighboring cell according to the enhanced-control-channel scheduling indication information, thereby avoiding a case where an enhanced control channel is strongly interfered with by a neighboring cell, solving an interference problem of enhanced control channels between cells, and ensuring performance of an enhanced control channel in an interfered-with cell.

## BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.

FIG. 1 is a flowchart of a method for interference coordination according to Embodiment 1 of the present invention;

FIG. 2 is a flowchart of another method for interference coordination according to Embodiment 1 of the present invention;

FIG. 3 is a flowchart of a method for interference coordination according to Embodiment 2 of the present invention;

FIG 4 is a flowchart of a method for interference coordination according to Embodiment 3 of the present invention;

FIG. 5 is a structural block diagram of an apparatus for interference coordination according to Embodiment 4 of the present invention;

FIG 6 is a structural block diagram of another apparatus for interference coordination according to Embodiment 4 of the present invention;

FIG. 7 is a structural block diagram of another apparatus for interference coordination according to Embodiment 4 of the present invention;

FIG. 8 is a structural block diagram of another apparatus for interference coordination according to Embodiment 4 of the present invention;

FIG. 9 is a structural block diagram of another apparatus for interference coordination according to Embodiment 4 of the present invention;

FIG. 10 is a structural block diagram of another apparatus for interference coordination according to Embodiment 4 of the present invention;

FIG. 11 is a structural block diagram of another apparatus for interference coordination according to Embodiment 4 of the present invention;

FIG. 12 is a structural block diagram of an apparatus for interference coordination according to Embodiment 5 of the present invention; and

FIG. 13 is a structural block diagram of another apparatus for interference coordination according to Embodiment 5 of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

**Embodiment 1**

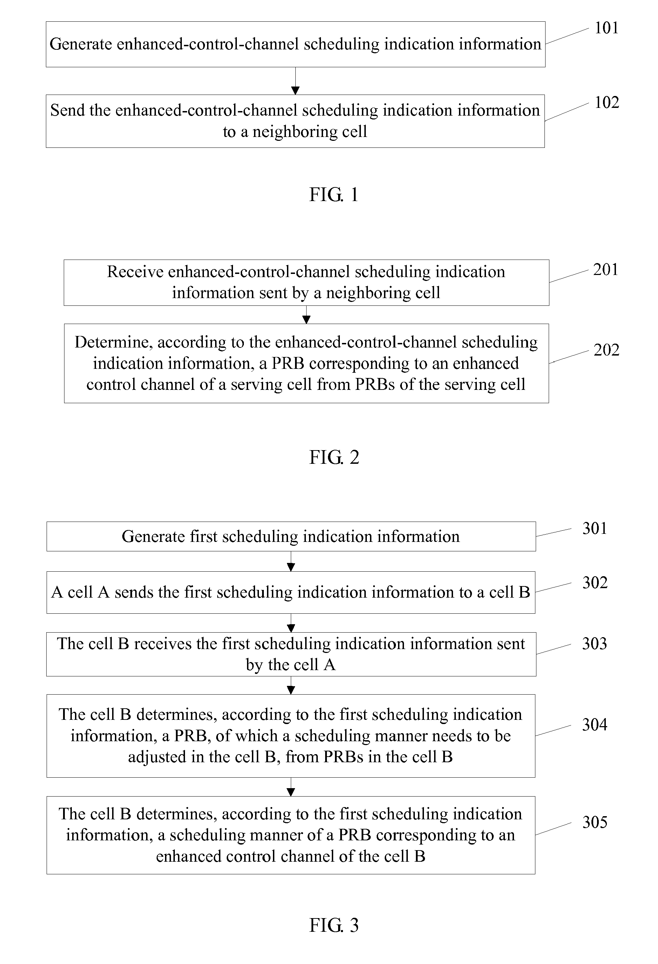

An embodiment of the present invention provides a method for interference coordination, and as shown in FIG. 1, the method includes:

101. Generate enhanced-control-channel scheduling indication information.

The enhanced-control-channel scheduling indication information includes first scheduling indication information and/or second scheduling indication information, where, the first scheduling indication information is used for identifying a PRB corresponding to an interfered-with enhanced control channel in the cell, and the second scheduling indication information is used for indicating transmit power information corresponding to each PRB in the cell.

A minimum unit of LTE radio resource allocation is a physical resource block (PRB, physical resource block), and one PRB includes 12 sub-carriers that are adjacent in a frequency domain.

The first scheduling indication information may specifically include identification information of the PRB corresponding to the interfered-with enhanced control channel in the cell, for example, information having an identification function, such as a block number of the PRB. Further, for ease of adjustment on a PRB scheduling manner of a neighboring cell by the neighboring cell, the first scheduling indication information may also include a scheduling manner of each PRB, for example, transmit power of a PRB, and a transmit direction of the enhanced control channel that schedules the PRB, and other information.

It should be noted that, in the embodiment, the described PRB corresponding to the interfered-with enhanced control channel is a PRB corresponding to an enhanced control channel that has been currently interfered with by the neighboring cell in the cell, and a PRB corresponding to an enhanced control channel that may be interfered with by a neighboring cell after a period of time when reference is made to a current cell status.

The second scheduling indication information may include a relative narrowband transmit power value corresponding to each PRB in the cell and a relative narrowband transmit power threshold.

The enhanced control channel includes an E-PDCCH (enchanted physical downlink control channel, enhanced physical downlink control channel) and/or an E-PHICH (Enhanced-Physical Hybrid ARQ Indicator Channel, enhanced-physical hybrid ARQ indicator channel).

102. Send the enhanced-control-channel scheduling indication information to the neighboring cell, so that the neighboring cell determines, according to the enhanced-control-channel scheduling indication information, a PRB, of which a scheduling manner needs to be adjusted, in the neighboring cell.

The sending enhanced-control-channel scheduling indication information to the inc neighboring cell may be implemented by using the following two methods, including:

a first method: directly sending the enhanced-control-channel scheduling indication information to the neighboring cell; and

a second method: sending the enhanced-control-channel scheduling indication information to an OAM (Operation, Administration and Maintenance, operation, administration and maintenance), so that the OAM, when receiving the enhanced-control-channel scheduling indication information, forwards the enhanced-control-channel scheduling indication information to the neighboring cell.

In the first method, the sending the enhanced-control-channel scheduling indication information to the neighboring cell may use a type of information, such as load indication information between base stations, for transmission.

In the second method, when the OAM performs forwarding, interaction between the cell and the OAM may use a type of message, such as a configuration message of a base station from an OAM, for transmission.

An embodiment of the present invention further provides a method for interference coordination, and as shown in FIG. 2, the method includes:

201. Receive enhanced-control-channel scheduling indication information sent by a neighboring cell, where the enhanced-control-channel scheduling indication information includes first scheduling indication information and/or second scheduling indication information.

The first scheduling indication information is used for identifying a PRB corresponding to an interfered-with enhanced control channel in the neighboring cell, and the second scheduling indication information is used for indicating transmit power information corresponding to each PRB in the neighboring cell. A detailed description is the same as the related description in step 102.

The enhanced control channel includes an E-PDCCH (enchanted physical downlink control channel, enhanced physical downlink control channel) and/or an E-PHICH (Enhanced-Physical Hybrid ARQ Indicator Channel, enhanced-physical hybrid ARQ indicator channel).

It should be noted that the received enhanced-control-channel scheduling indication information sent by the neighboring cell may be directly sent by the neighboring cell and may also be sent to the OAM by the neighboring cell and then be forwarded.

202. Determine, according to the enhanced-control-channel scheduling indication information, a PRB, of which a scheduling manner needs to be adjusted, in the neighboring cell.

The embodiment of the present invention provides a method for interference coordination, where a cell sends enhanced-control-channel scheduling indication information to a neighboring cell, and the neighboring cell, after receiving the enhanced-control-channel scheduling indication information, adjusts scheduling of a PRB in the neighboring cell according to the enhanced-control-channel scheduling indication information, thereby avoiding a case where an enhanced control channel is strongly interfered with by a neighboring cell, solving a problem that an enhanced control channel is strongly interfered with by a neighboring cell, and ensuring performance of an enhanced control channel of each cell.

**Embodiment 2**

An embodiment of the present invention provides a method for interference coordination, which may be applied to a heterogeneous network defined in 3GPP LTE-A. In this embodiment, a cell A and a cell B, which belong to different base stations in the heterogeneous network but are adjacent spatially, are used as an example to describe a procedure for interference coordination in detail, which, as shown in FIG. 3, specifically includes the following steps:

301. A cell A generates first scheduling indication information.

The first scheduling indication information is used to identify a PRB corresponding to an interfered-with enhanced control channel in the cell A.

The generating the first scheduling indication information may be implemented by using the following method, which specifically is:

detecting whether interference exists on an enhanced control channel currently scheduled to a user equipment; if it is detected that the interference exists on the enhanced control channel currently scheduled to the user equipment, determining, from PRBs in the cell, a PRB corresponding to the enhanced control channel in which the interference exists; and generating the first scheduling indication information according to the determined PRB corresponding to the enhanced control channel in which the interference exists. Detecting whether interference exists on an enhanced control channel may be implemented by using a method, such as power comparison and detection of a success rate of information reception, which is not limited by the embodiment of the present invention.

In this embodiment, at the time of detecting whether interference exists on an enhanced control channel currently scheduled to a user equipment, if it is detected that the enhanced control channel currently scheduled to the user equipment has been interfered with by a neighboring cell, it is determined that the interference exists on the enhanced control channel, and if it is detected that some PRBs will be used for scheduling the enhanced control channel after a period of time and these PRBs will be interfered with by the neighboring cell according to a current cell signal status, it is also determined that the interference exists on the enhanced control channel.

The implementation method for generating the first scheduling indication information according to the determined PRB corresponding to the enhanced control channel in which the interference exists may be as follows: Process, in a manner of a bit map or joint coding, identification information of the PRB corresponding to the enhanced control channel in which the interference exists, and generate the first scheduling indication information.

It should be noted that, in the cell A, if there are both a PRB corresponding to an interfered-with E-PDCCH and a PRB corresponding to an interfered-with E-PHICH, the cell A needs to respectively generate, according to the PRBs respectively corresponding to the interfered-with E-PDCCH and the interfered-with E-PHICH, the first scheduling indication information and respectively send the first scheduling indication information to the neighboring cell. Alternatively, according to PRBs respectively corresponding to two different enhanced control channels, the cell A together generate a same piece of first scheduling indication information and use other additional indication information to distinguish the PRB corresponding to the interfered-with E-PDCCH from the PRB corresponding to the interfered-with E-PHICH in the same first scheduling indication information.

302. The cell A sends the first scheduling indication information to a cell B.

303. The cell B receives the first scheduling indication information sent by the cell A.

304. The cell B determines, according to the first scheduling indication information, a PRB, of which a scheduling manner needs to be adjusted in the cell B, from PRBs in the cell B.

The determining, according to the first scheduling indication information, a PRB, of which a scheduling manner needs to be adjusted in the cell B, may be implemented by using the following method, which includes:

determining, according to the first scheduling indication information, a PRB corresponding to an interfered-with enhanced control channel in the cell A; and
determining, from PRBs in the cell B, a PRB that uses a same scheduling resource as the PRB corresponding to the interfered-with enhanced control channel in the cell A, as the PRB, of which the scheduling manner needs to be adjusted in the cell B.

If a configuration of the cell A is the same as that of the cell B, the number of PRBs in the cell A is the same as that in the cell B. Then, during a process of determining a PRB that uses a same scheduling resource as the PRB corresponding to the interfered-with enhanced control channel in the cell A as a PRB corresponding to an enhanced control channel in the cell B, determine, directly in the cell B, a PRB, which has a same block number as the PRB corresponding to the interfered-with enhanced control channel in the cell A, as the PRB corresponding to the enhanced control channel in the cell B.

If the configuration of the cell A is different from that of the cell B, the cell B still needs to obtain resource allocation information of the PRB in the cell A, so as to determine indication information of the PRB, which uses the same scheduling resource, as the PRB corresponding to the interfered-with enhanced control channel in the cell A.

305. The cell B determines, according to the first scheduling indication information, a scheduling manner of the PRB corresponding to the enhanced control channel of the cell B.

The scheduling manner may include, but is not limited to, a manner that the cell B transmits a PRB by using low power, transmits a PRB by using zero power, or transmits a PRB by using a spatial resource which is spatially orthogonal to a transmit direction of an enhanced control channel of the cell A.

In addition, it should be noted that the embodiment of the present invention only uses an example of two cells in a heterogeneous network defined in 3GPP LTE-A for description; however, the technical solution provided in the present invention is not limited to the use in this network scenario only.

The embodiment of the present invention provides a method for interference coordination, where a cell sends enhanced-control-channel scheduling indication information to a neighboring cell, and the neighboring cell, after receiving the enhanced-control-channel scheduling indication information, adjusts scheduling of a PRB in the neighboring cell according to the enhanced-control-channel scheduling indication information, thereby avoiding a case where an enhanced control channel is strongly interfered with by a neighboring cell, and ensuring performance of an enhanced control channel of each cell.

**Embodiment 3**

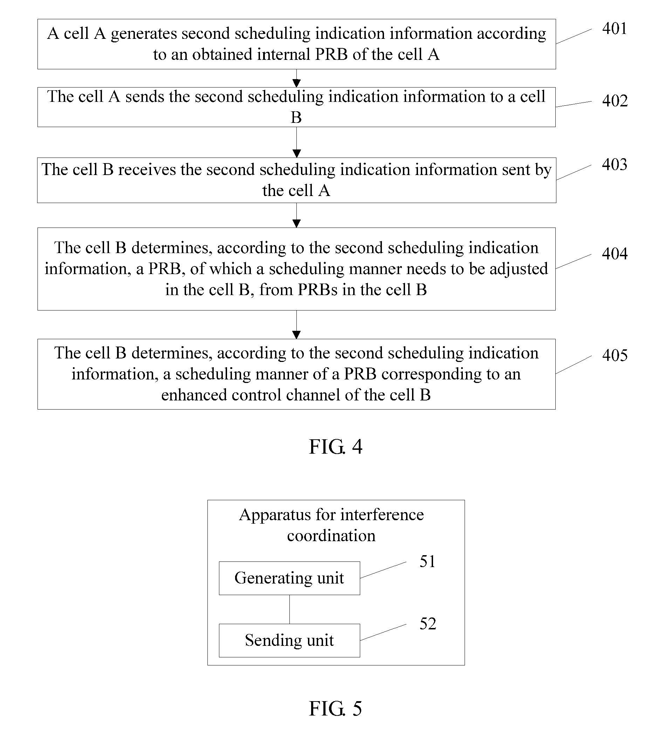

An embodiment of the present invention provides a method for interference coordination, which may be applied to a heterogeneous network defined in 3GPP LTE-A. In this embodiment, a cell A and a cell B, which belong to different base stations in the heterogeneous network but are adjacent spatially, are used as an example to describe a procedure for interference coordination in detail, which, as shown in FIG. 4, specifically includes the following steps:

401. A cell A generates second scheduling indication information.

The second scheduling indication information is used for indicating transmit power information corresponding to each PRB in the neighboring cell, which may specifically include a relative narrowband transmit power value corresponding to each PRB in the cell A and at least one relative narrowband transmit power threshold.

The generating the enhanced-control-channel scheduling indication information according to the obtained PRB in the cell A may be implemented by using the following method, which specifically is:

setting, according to a preset strategy, at least one relative narrowband transmit power threshold;
respectively generating, according to the at least one relative narrowband transmit power value, a relative narrowband transmit power value corresponding to each PRB; and
generating the second scheduling indication information according to the relative narrowband transmit power value corresponding to each PRB and the at least one relative narrowband transmit power threshold.

The preset strategy may include a value range of the relative narrow transmit power threshold, a performance requirement for receiving and sending a signal of a cell, and so on. For example, if the distance between the cell A and the cell B is large, a large threshold may be set; if the distance between the cell A and the cell B is small, a small threshold may be set, which is not limited by the embodiment of the present invention.

If only one relative narrowband transmit power threshold $RNTP_{threshold\_1}$ ($RNT_{threshold\_control}$) is set, that the relative narrowband transmit power value corresponding to each PRB is respectively generated according to the $RNT_{threshold\_1}$ ($RNT_{threshold\_control}$) can be generated in a manner defined in Table 1.

**Table 1 Definition of RNTP_1**

| $RNTP\_2$ | |
|-----------|----------------------------------------------------------------------|
| 0 | Tx does not exceed $RNTP_{threshold\_1}$ ($RNTP_{threshold\_control}$) |
| 1 | No promise is made about Tx |

In Table 1, RNTP_2 is a relative narrowband transmit power value of a PRB, and RNTP_2 values of different PRBs need to be determined. Tx is a ratio of an EPRE (energy per resource element) of a PRB to an EPRE corresponding to maximum transmit power of an eNB, and the calculation method of Tx follows the following formula (1):

$$Tx = \frac{E_A(n_{PRB})}{E_{\max\_nom}^{(p)}} \qquad (1)$$

where, $E_A(n_{PRB})$ is a maximum EPRE value to be used on a symbol other than an OFDM symbol carrying an RS (Reference signal) on the PRB in the cell, $n_{PRB}$ is a physical resource block number, $n_{PRB} = 0,...,N_{RB}^{DL} - 1$, $N_{RB}^{DL}$ is the number of PRBs within a downlink bandwidth, $E_{\max\_nom}^{(p)} = \dfrac{P_{\max}^{(p)} \cdot \dfrac{1}{\Delta f}}{N_{RB}^{DL} \cdot N_{SC}^{RB}}$, $N_{SC}^{RB}$ is the number of subcarriers in a

PRB, $\Delta f$ is a subcarrier width, and $P_{\max}^{(p)}$ is a maximum output power of a base station.

If multiple relative narrowband transmit power thresholds are set, and four thresholds are used as an example in this embodiment, that a relative narrowband transmit power value corresponding to each PRB is respectively generated according to the four set thresholds can be generated in a manner defined in table 2.

**Table 2 Definition of RNTP_N**

| $RNTP\_N$ | |
|-----------|---------------------------------------------------------------------------------|
| 0 | The value of Tx is between $RNTP_{threshold\_1}$ and $RNTP_{threshold\_2}$ |
| 1 | The value of Tx is between $RNTP_{threshold\_2}$ and $RNTP_{threshold\_3}$ |
| 2 | The value of Tx is between $RNTP_{threshold\_3}$ and $RNTP_{threshold\_4}$ |
| 3 | No promise is made about Tx |

Tx is the same as the related description of Table 1, and $RNTP_{threshold\_1}$ to $RNTP_{threshold\_4}$ are four set thresholds, meeting $RNTP_{threshold\_1} > RNTP_{threshold\_2} > RNTP_{threshold\_3} > RNTP_{threshold\_4}$.

If more thresholds are set, the definition may be adaptively expanded according to the format of Table 1 and Table 2.

The second scheduling indication information may be transmitted in a format of IE of load information. For a specific representation method, see Table 3 and Table 4. Table 3 represents a format of the second scheduling indication information which is obtained when only one threshold is set in the cell A, and Table 4 represents a format of the second scheduling indication information which is obtained when four thresholds are set in the cell A.

**Table 3 Format 1 of second scheduling indication information**

| IE/Group Name | Presence | Range | IE type and reference | Semantics description | Criticality | Assigned Criticality |
|---|---|---|---|---|---|---|
| RNTP_2 Per PRB | M | | BIT STRING (6..110,...) | Each position in the bitmap represents a $n_{PRB}$ value (i.e. first bit=PRB 0 and so on), for which the bit value represents $RNTP\,(n_{PRB})$ | - | - |
| $RNTP_{threshold\_2}$ | M | | ENUMERATED (-∞, -19,-17,-15,-13,-11, -10, -9, -8, -7, -6, -5, -4, -3, -2, -1, 0, 1, 2, 3, ...) | $RNTP_{threshold\_\_2}$ is defined like Table-1 | - | - |

**Table 4 Format 2 of second scheduling indication information**

| IE/Group Name | Presence | Range | IE type and reference | Semantics description | Criticality | Assigned Criticality |
|---|---|---|---|---|---|---|
| RNTP_N Per PRB | M | | INTEGER (0..3) | Each position of the INTEGER represents a $n_{PRB}$ value (i.e. first bit=PRB 0 and so on), for which the INTEGER value represents $RNTP\,(n_{PRB})$, defined in Table-2 | - | - |
| $RNTP_{threshold\_1}$ | M | | ENUMERATED (-∞, -19,-17,-15,-13,-1 1, -10, -9, -8, -7, -6, -5, -4, -3, -2, -1,0, 1,2,3,...) | $RNTP_{threshold\_2}$ is defined in Table-1 | - | - |
| $RNTP_{threshold\_2}$ | M | | ENUMERATED (-∞ -21, -19,-17,-15,-13,-1 1, -10, -9, -8, -7, -6, -5, -4, -3, -2, -1, 0, 1, 2, 3, ...) | defined as above | | |

(continued)

| IE/Group Name | Presence | Range | IE type and reference | Semantics description | Criticality | Assigned Criticality |
|---|---|---|---|---|---|---|
| $RNTP_{threshold\_3}$ | M | | ENUMERATED (-∞ -23, -21, -19,-17,-15,-13,-1 1, -10, -9, -8, -7, -6, -5, -4, -3, -2, -1, 0, 1, 2, 3, ...) | defined as above | | |
| $RNTP_{threshold\_4}$ | M | | ENUMERATED (-∞ -25, -23, -21, -19,-17,-15,-13,-1 1, -10, -9, -8, -7, -6, -5, -4, -3, -2, -1,0, 1,2,3,...) | defined as above | | |

It should be noted that content in Table 3 and Table 4 is merely an example, and in a case where there are more thresholds, content of the tables may be adaptively modified and added. A type and reference of information element may also adopt a manner of a bit map or joint coding or another form.

402. The cell A sends the second scheduling indication information to a cell B.

403. The cell B receives the second scheduling indication information sent by the neighboring cell.

404. The cell B determines, according to the second scheduling indication information, a PRB, of which a scheduling manner needs to be adjusted in the cell B, from PRBs in the cell B.

The determining, according to the second scheduling indication information, a PRB, of which a scheduling manner needs to be adjusted in the cell B, may be implemented by using the following method, which includes:

determining, according to the second scheduling indication information, a relative narrowband transmit power value corresponding to each PRB in the cell A and at least one relative narrowband transmit power threshold; performing calculation according to the relative narrowband transmit power value corresponding to each PRB in the cell A and the relative narrowband transmit power threshold of the cell A to estimate a transmit power value corresponding to each PRB in the cell A; and determining, according to preset anti-interference information and the transmit power value corresponding to each PRB in the cell A, a PRB corresponding to an enhanced control channel of the cell B, and determining the PRB corresponding to the enhanced control channel of the cell B as a PRB, of which a scheduling manner needs to be adjusted, in the cell B.

During an implementation process that at least one relative narrowband transmit power threshold is determined according to the second scheduling indication information, the number of determined relative narrowband transmit power thresholds depends on the number of relative narrowband transmit power thresholds carried in the second scheduling indication information. For example, the second scheduling indication information carries one relative narrowband transmit power threshold, and then the cell B must determine one relative narrowband transmit power threshold from the second scheduling indication information; if the second scheduling indication information carries four relative narrowband transmit power thresholds, the cell B must determine four relative narrowband transmit power thresholds from the second scheduling indication information.

The preset anti-interference information may include power thresholds that are set in the cell B for enhanced control channels carrying different control information, power thresholds that are set in the cell B for enhanced control channels covering users of different areas, and so on. The anti-interference information is specifically used to provide a selection rule for selecting a PRB corresponding to an enhanced control channel in the cell B. For example, two thresholds are set under a selection rule provided in the anti-interference information, and the cell B may allocate a PRB, of which the transmit power value exceeds a small power threshold but does not exceed a large power threshold, to an enhanced control channel with a low performance requirement, and allocate a PRB, of which the transmit power value does not exceed a small power threshold, to an enhanced control channel with a high performance requirement. If the enhanced control channel has two types of channels: an E-PDCCH and an E-PHICH, the cell B may allocate a PRB, of which the transmit power value exceeds a small power threshold but does not exceed a large power threshold, to the E-PDCCH, and allocate a PRB, of which the transmit power value does not exceed the small power threshold, to the E-PHICH. Definitely, the foregoing is only an example in this embodiment. A specific allocation method may be set according to an actual requirement.

405. The cell B adjusts a scheduling manner of a PRB in the cell B according to the second scheduling indication information.

Adjustment of a scheduling manner includes adjustment of enhanced control channels to which a PRB is to be allocated and adjustment of PRB transmit power for transmission, and so on.

In addition, it should be noted that Embodiment 2 and Embodiment 3 respectively aim at the enhanced-control-channel scheduling indication information being the first scheduling indication information and the enhanced-control-channel scheduling indication information being the second scheduling indication information. When the enhanced-control-channel scheduling indication information simultaneously includes the two types of scheduling information, a procedure to be executed may be implemented by executing steps 301 to 307 and steps 401 to 407 together.

In addition, it should be noted that a unit of enhanced-control-channel scheduling indication information described in the foregoing embodiment is PRB, but a corresponding solution procedure may also be applied to another scheduling unit granularity, for example, defining fixedly consecutive several PRBs as a PRB group, the corresponding solution procedure is consistent with a process described in the present invention.

In addition, it should be noted that, in the embodiment, the RNTP_1, RNTP_N, $RNTP_{threshold\_1}$, $RNTP_{threshold\_2}$, $RNTP_{threshold\_3}$, and $RNTP_{threshold\_4}$ are all parameters used to indicate a signal condition of an enhanced control channel of each cell. These parameters may be used along with parameters used to indicate signal conditions of channels, such as a PDSCH and a PDCCH.

The embodiment of the present invention provides a method for interference coordination, where a cell sends enhanced-control-channel scheduling indication information to a neighboring cell, and the neighboring cell, after receiving the enhanced-control-channel scheduling indication information, adjusts scheduling of a PRB in the neighboring cell according to the enhanced-control-channel scheduling indication information, thereby avoiding a case where an enhanced control channel is strongly interfered with by a neighboring cell, and ensuring performance of an enhanced control channel of each cell.

**Embodiment 4**

An embodiment of the present invention provides an apparatus for interference coordination, and as shown in FIG. 5, the apparatus includes: a generating unit 51 and a sending unit 52.

The generating unit 51 is configured to generate enhanced-control-channel scheduling indication information, where the enhanced-control-channel scheduling indication information includes first scheduling indication information and/or second scheduling indication information, the first scheduling indication information is used for identifying a PRB corresponding to an interfered-with enhanced control channel in the cell, and the second scheduling indication information is used for indicating transmit power information corresponding to each PRB in the cell.

The sending unit 51 is configured to send, to a neighboring cell, the enhanced-control-channel scheduling indication information generated by the generating unit 51, so that the neighboring cell determines, according to the enhanced-control-channel scheduling indication information, a PRB, of which a scheduling manner needs to be adjusted, in the neighboring cell.

The enhanced control channel includes an enhanced physical downlink control channel and/or an enhanced-physical hybrid ARQ indicator channel E-PHICH.

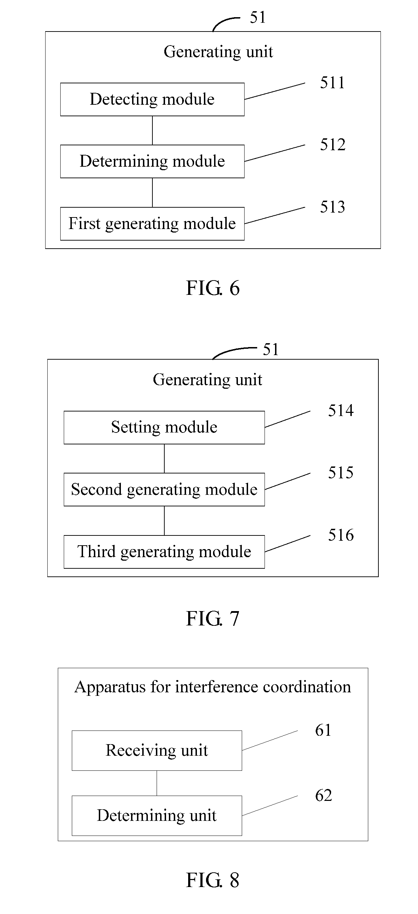

Optionally, as shown in FIG. 6, the generating unit 51 includes: a detecting module 511, a determining module 512, and a first generating module 513.

The detecting module 511 is configured to detect whether interference exists on an enhanced control channel currently scheduled to a user equipment when the enhanced-control-channel scheduling indication information is the first scheduling indication information.

The determining module 512 is configured to: when the detecting module 11 detects that the interference exists on the enhanced control channel currently scheduled to the user equipment, determine, from PRBs in the cell, a PRB corresponding to the enhanced control channel in which the interference exists.

The first generating module 513 is configured to generate the first scheduling indication information according to the PRB that is determined by the determining module 512 and corresponds to the enhanced control channel in which the interference exists.

Optionally, as shown in FIG. 7, the generating unit 51 includes: a setting module 514, a second generating module 515, and a third generating module 516.

The setting module 514 is configured to set, according to a preset strategy, at least one relative narrowband transmit power threshold when the enhanced-control-channel scheduling indication information is the second scheduling indication information.

The second generating module 515 is configured to respectively generate, according to the at least one relative narrowband transmit power threshold, a relative narrowband transmit power value corresponding to each PRB.

The third generating module 516 is configured to generate the second scheduling indication information according to the relative narrowband transmit power value corresponding to each PRB and the at least one relative narrowband transmit power threshold.

Optionally, the sending unit 51 is specifically configured to directly send the enhanced-control-channel scheduling indication information to the neighboring cell, and/or send the enhanced-control-channel scheduling indication information to an OAM, so that the OAM, when receiving the enhanced-control-channel scheduling indication information, forwards the enhanced-control-channel scheduling indication information to the neighboring cell.

An embodiment of the present invention provides another apparatus for interference coordination, which, as shown in FIG. 8, includes: a receiving unit 61 and a determining unit 62.

The receiving unit 61 is configured to receive enhanced-control-channel scheduling indication information sent by a neighboring cell, where the enhanced-control-channel scheduling indication information includes first scheduling indication information and/or second scheduling indication information, where the first scheduling indication information is used for identifying a PRB corresponding to an interfered-with enhanced control channel in the neighboring cell, and the second scheduling indication information is used for indicating transmit power information corresponding to each PRB in the neighboring cell.

The determining unit 62 is configured to determine, from PRBs in a cell according to the enhanced-control-channel scheduling indication information, a PRB, of which a scheduling manner needs to be adjusted, in the neighboring cell.

The enhanced control channel includes an enhanced physical downlink control channel and/or an enhanced-physical hybrid ARQ indicator channel E-PHICH.

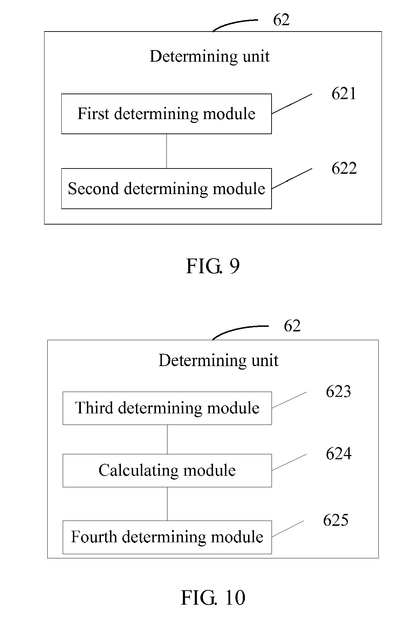

Optionally, as shown in FIG. 9, the determining unit 62 includes: a first determining module 621 and a second determining unit 622.

The first determining module 621 is configured to: when the enhanced-control-channel scheduling indication information is the first scheduling indication information, determine a PRB corresponding to an interfered-with enhanced control channel in the neighboring cell according to the first scheduling indication information.

The second determining unit 622 is configured to determine, from PRBs in the cell B, a PRB that uses a same scheduling resource as the PRB corresponding to the interfered-with enhanced control channel in the neighboring cell, as a PRB corresponding to the enhanced control channel in the cell.

Optionally, as shown in FIG. 10, the determining unit 62 includes: a third determining module 623, a calculating module 624, and a fourth determining unit 625.

The third determining module 623 is configured to: when the enhanced-control-channel scheduling indication information is the second scheduling indication information, determine, according to the second scheduling indication information, a relative narrowband transmit power value corresponding to each PRB in the neighboring cell and at least one relative narrowband transmit power threshold in the neighboring cell;

The calculating module 624 is configured to perform calculation according to the relative narrowband transmit power value corresponding to each PRB in the neighboring cell and the at least one relative narrowband transmit power threshold in the neighboring cell to obtain a transmit power value corresponding to each PRB in the neighboring cell.

The fourth determining module 625 is configured to determine, according to preset anti-interference information and the transmit power value corresponding to each PRB in the neighboring cell, a PRB corresponding to an enhanced control channel of the cell, and determine the PRB corresponding to the enhanced control channel of the cell as a PRB, of which a scheduling manner needs to be adjusted, in the cell.

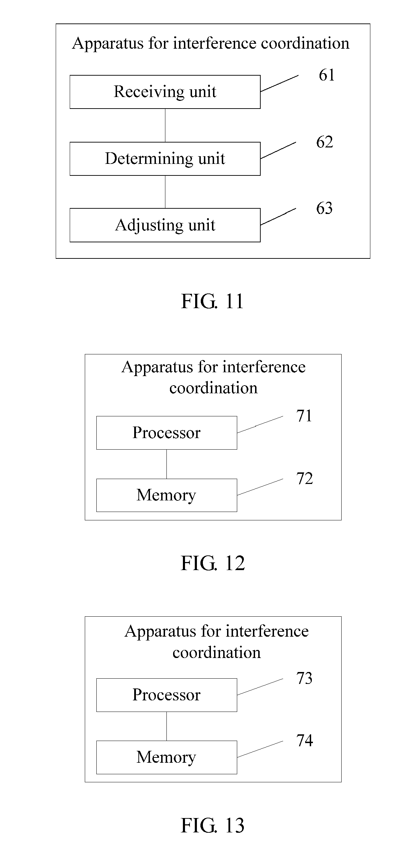

Optionally, as shown in FIG. 11, the apparatus further includes: an adjusting unit 63.

The adjusting unit 63 is configured to adjust the scheduling manner of the PRB in the cell according to the enhanced-control-channel scheduling indication information.

The embodiment of the present invention provides an apparatus for interference coordination, where a cell sends enhanced-control-channel scheduling indication information to a neighboring cell, and the neighboring cell, after receiving the enhanced-control-channel scheduling indication information, adjusts scheduling of a PRB in the neighboring cell according to the enhanced-control-channel scheduling indication information, so that PRB information of neighboring cells can be mutually considered between the neighboring cells to determine PRBs corresponding to enhanced control channels of the neighboring cells, thereby avoiding a case where an enhanced control channel is strongly interfered with by a neighboring cell, avoiding a case where an enhanced control channel is strongly interfered with by a neighboring cell, and ensuring performance of an enhanced control channel of each cell.

**Embodiment 5**

An embodiment of the present invention provides an apparatus for interference coordination, and as shown in FIG. 12, the apparatus includes: a processor 71 and a memory 72.

The processor 71 is configured to generate enhanced-control-channel scheduling indication information of an enhanced physical downlink control channel, where the enhanced-control-channel scheduling indication information includes first scheduling indication information and/or second scheduling indication information, the first scheduling indication information is used for identifying a PRB corresponding to an interfered-with enhanced control channel in the cell, and the second scheduling indication information is used for indicating transmit power information corresponding to each PRB in the cell; and send the enhanced-control-channel scheduling indication information to a neighboring cell, so that the neighboring cell determines, according to the enhanced-control-channel scheduling indication information, a PRB, of which a scheduling manner needs to be adjusted, in the neighboring cell

The enhanced control channel includes an enhanced physical downlink control channel and/or an enhanced-physical hybrid ARQ indicator channel E-PHICH.

The memory 72 is configured to store the enhanced-control-channel scheduling indication information.

The processor 71 is specifically configured to: when the enhanced-control-channel scheduling indication information is the first scheduling indication information, detect whether interference exists on an enhanced control channel currently scheduled to a user equipment; if it is detected that the interference exists on the enhanced control channel currently scheduled to the user equipment, determine, from PRBs in the cell, a PRB corresponding to the enhanced control channel in which the interference exists; and generate the first scheduling indication information according to the determined PRB corresponding to the enhanced control channel in which the interference exists.

The processor 71 is specifically further configured to: when the enhanced-control-channel scheduling indication information is the second scheduling indication information, set, according to a preset strategy, at least one relative narrowband transmit power threshold; respectively generate, according to the at least one relative narrowband transmit power threshold, a relative narrowband transmit power value corresponding to each PRB; and generate the second scheduling indication information according to the relative narrowband transmit power value corresponding to each PRB and the at least one relative narrowband transmit power threshold.

The memory 72 is further configured to store at least one relative narrowband transmit power threshold and a relative narrowband transmit power value corresponding to each PRB.

The processor 71 is specifically further configured to directly send the enhanced-control-channel scheduling indication information to the neighboring cell, and/or send the enhanced-control-channel scheduling indication information to an OAM, so that the OAM, when receiving the enhanced-control-channel scheduling indication information, forwards the enhanced-control-channel scheduling indication information to the neighboring cell.

An embodiment of the present invention provides an apparatus for interference coordination, and as shown in FIG. 13, the apparatus includes: a processor 73 and a memory 74.

The processor 73 is configured to receive enhanced-control-channel scheduling indication information sent by a neighboring cell, where the enhanced-control-channel scheduling indication information includes first scheduling indication information and/or second scheduling indication information, where the first scheduling indication information is used for identifying a PRB corresponding to an interfered-with enhanced control channel in the neighboring cell, and the second scheduling indication information is used for indicating transmit power information corresponding to each PRB in the neighboring cell; and determine, according to the enhanced-control-channel scheduling indication information, a PRB, of which a scheduling manner needs to be adjusted, in the neighboring cell. The enhanced control channel includes an enhanced physical downlink control channel and/or an enhanced-physical hybrid ARQ indicator channel E-PHICH.

The memory 74 is configured to store the enhanced-control-channel scheduling indication information.

The processor 73 is specifically configured to: when the enhanced-control-channel scheduling indication information is the first scheduling indication information, determine a PRB corresponding to an interfered-with enhanced control channel in the neighboring cell according to the first scheduling indication information; and determine, from PRBs in the cell B, a PRB that uses a same scheduling resource as the PRB corresponding to the interfered-with enhanced control channel in the neighboring cell, as a PRB corresponding to the enhanced control channel in the cell.

The memory 74 is configured to store the PRB corresponding to the interfered-with enhanced control channel in the neighboring cell.

The processor 73 is specifically configured to: when the enhanced-control-channel scheduling indication information is the second scheduling indication information, determine, according to the second scheduling indication information, a relative narrowband transmit power value corresponding to each PRB in the neighboring cell and at least one relative narrowband transmit power threshold; perform calculation according to the relative narrowband transmit power value corresponding to each PRB in the neighboring cell and the at least one relative narrowband transmit power threshold to obtain a transmit power value corresponding to each PRB in the neighboring cell; and determine, according to preset anti-interference information and the transmit power value corresponding to each PRB in the neighboring cell, a PRB corresponding to an enhanced control channel of the cell, and determine the PRB corresponding to the enhanced control channel of the cell as a PRB, of which a scheduling manner needs to be adjusted, in the cell.

The memory 74 is configured to store the relative narrowband transmit power value corresponding to each PRB in the neighboring cell, the at least one relative narrowband transmit power threshold, and the transmit power value corresponding to each PRB in the neighboring cell.

The processor 73 is further configured to adjust the scheduling manner of the PRB in the cell according to the enhanced-control-channel scheduling indication information.

The processor 73 is specifically further configured to directly send the enhanced-control-channel scheduling indication information to the neighboring cell, and/or send the enhanced-control-channel scheduling indication information to an OAM, so that the OAM, when receiving the enhanced-control-channel scheduling indication information, forwards the enhanced-control-channel scheduling indication information to the neighboring cell.

The embodiment of the present invention provides an apparatus for interference coordination, where a cell sends enhanced-control-channel scheduling indication information to a neighboring cell, and the neighboring cell, after receiving the enhanced-control-channel scheduling indication information, adjusts scheduling of a PRB in the neighboring cell according to the enhanced-control-channel scheduling indication information, so that PRB information of neighboring cells can be mutually considered between the neighboring cells to determine PRBs corresponding to enhanced control channels of the neighboring cells, thereby avoiding a case where an enhanced control channel is strongly interfered with by a neighboring cell, solving an interference problem of enhanced control channels between cells , and ensuring performance of an enhanced control channel of each cell.

Through the foregoing description of the embodiments, it is clear to a person skilled in the art that the present invention may be implemented by software plus necessary universal hardware, and definitely may also be implemented by hardware, but in many cases, the software implementation is preferred. Based on such an understanding, the technical solutions of the present invention essentially, or the part contributing to the prior art may be implemented in a form of a software product. The computer software product is stored in a readable storage medium, for example, a floppy disk, a hard disk, or an optical disc of a computer, and includes several instructions for instructing a computer device (which may be a personal computer, a server, or a network device, or the like) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A method for interference coordination, comprising:

    receiving enhanced-control-channel scheduling indication information sent by a neighboring cell, wherein the enhanced-control-channel scheduling indication information comprises scheduling indication information used for indicating transmit power information corresponding to each Physical Resource Block, PRB, in the neighboring cell (step 403); and
    determining, according to the scheduling indication information, a relative narrowband transmit power value corresponding to each PRB in the neighboring cell and determining, according to the scheduling indication information, at least one relative narrowband transmit power threshold (step 404);
    performing calculation according to the relative narrowband transmit power value corresponding to each PRB in the neighboring cell and the at least one relative narrowband transmit power threshold to obtain a transmit power value corresponding to each PRB in the neighboring cell; and
    determining, according to preset anti-interference information and according to the transmit power value corresponding to each PRB in the neighboring cell, a PRB corresponding to an enhanced control channel of the cell, and determining the PRB corresponding to the enhanced control channel of the cell as a PRB, of which a scheduling manner needs to be adjusted, in the cell,
    adjusting the scheduling manner of the PRB in the cell according to the enhanced-control-channel scheduling indication information (step 405).

2.  The method according to claim 1, wherein the enhanced control channel comprises an enhanced physical downlink control channel and/or an enhanced-physical hybrid ARQ indicator channel E-PHICH.

3.  An apparatus for interference coordination, comprising:

    a receiving unit (61), configured to receive enhanced-control-channel scheduling indication information sent by a neighboring cell, wherein the enhanced-control-channel scheduling indication information comprises scheduling indication information, the scheduling indication information is used for indicating transmit power information corresponding to each Physical Resource Block, PRB, in the neighboring cell; and

an obtaining unit, configured to obtain a PRB in a cell; and

a first determining module (623), configured to: determine, according to the scheduling indication information, a relative narrowband transmit power value corresponding to each PRB in the neighboring cell and determining, according to the scheduling indication information, at least one relative narrowband transmit power threshold in the neighboring cell;

a calculating module (624), configured to perform calculation according to the relative narrowband transmit power value corresponding to each PRB in the neighboring cell and the at least one relative narrowband transmit power threshold in the neighboring cell to obtain a transmit power value corresponding to each PRB in the neighboring cell; and

a second determining module (625), configured to: determine, according to preset anti-interference information and according to the transmit power value corresponding to each PRB in the neighboring cell, a PRB corresponding to an enhanced control channel of the cell, and determine the PRB corresponding to the enhanced control channel of the cell as a PRB, of which a scheduling manner needs to be adjusted, in the cell,

wherein the apparatus further comprises an adjusting unit (63), configured to adjust the scheduling manner of the PRB in the cell according to the enhanced-control-channel scheduling indication information.

4. The apparatus according to claim 3, wherein the enhanced control channel comprises an enhanced physical downlink control channel and/or an enhanced-physical hybrid ARQ indicator channel E-PHICH.

**Patentansprüche**

1. Verfahren für eine Interferenzkoordinierung, umfassend:

Empfangen von Planungsanzeigeinformationen eines erweiterten Steuerkanals, die von einer Nachbarzelle gesendet werden, wobei die Planungsanzeigeinformationen des erweiterten Steuerkanals Planungsanzeigeinformationen umfassen, die verwendet werden, um Übertragungsleistungsinformationen anzuzeigen, die jedem der physischen Ressourcenblocks, PRBs, in der Nachbarzelle entsprechen (Schritt 403); und

Ermitteln gemäß den Planungsanzeigeinformationen eines relativ schmalbandigen Übertragungsleistungswerts, der jedem der PRBs in der Nachbarzelle entspricht, und Ermitteln gemäß den Planungsanzeigeinformationen mindestens eines relativ schmalbandigen Übertragungsleistungsschwellenwerts (Schritt 404);

Ausführen einer Berechnung gemäß dem relativ schmalbandigen Übertragungsleistungswert, der jedem der PRBs in der Nachbarzelle entspricht, und dem mindestens einen relativ schmalbandigen Übertragungsleistungsschwellenwert, um einen Übertragungsleistungswert zu erhalten, der jedem der PRBs in der Nachbarzelle entspricht; und

Ermitteln gemäß voreingestellter Antiinterferenzinformationen und gemäß dem Übertragungsleistungswert, der jedem der PRBs in der Nachbarzelle entspricht, eines PRB, der einem erweiterten Steuerkanal der Zelle entspricht, und Ermitteln des PRB, der dem erweiterten Steuerkanal der Zelle als ein PRB, von dem eine Planungsweise in der Zelle eingestellt werden muss, entspricht,

Einstellen der Planungsweise des PRB in der Zelle gemäß den Planungsanzeigeinformationen des erweiterten Steuerkanals (Schritt 405).

2. Verfahren nach Anspruch 1, wobei der erweiterte Steuerkanal einen erweiterten Steuerkanal einer physischen Abwärtsübertragung und/oder einen erweiterten physischen Hybrid-ARQ-Anzeigekanal (Enhanced-Physical Hybrid ARQ Indicator CHannel E-PHICH) umfasst.

3. Vorrichtung für eine Interferenzkoordinierung, umfassend:

eine Empfangseinheit (61), die konfiguriert ist, Planungsanzeigeinformationen eines erweiterten Steuerkanals zu empfangen, die von einer Nachbarzelle gesendet werden, wobei die Planungsanzeigeinformationen des erweiterten Steuerkanals Planungsanzeigeinformationen umfassen, wobei die Planungsanzeigeinformationen verwendet werden, um Übertragungsleistungsinformationen anzuzeigen, die jedem der physischen Ressourcenblocks, PRBs, in der Nachbarzelle entsprechen; und eine Erhalteeinheit, die konfiguriert ist, einen PRB in einer Zelle zu erhalten; und

ein erstes Ermittlungsmodul (623), das konfiguriert ist, gemäß den Planungsanzeigeinformationen einen relativ schmalbandigen Übertragungsleistungswert zu ermitteln, der jedem der PRBs in der Nachbarzelle entspricht, und gemäß den Planungsanzeigeinformationen mindestens einen relativ schmalbandigen Übertragungsleistungsschwellenwert in der Nachbarzelle zu ermitteln;

ein Berechnungsmodul (624), das konfiguriert ist, eine Berechnung gemäß dem relativ schmalbandigen Übertragungsleistungswert, der jedem der PRBs in der Nachbarzelle entspricht, und dem mindestens einen relativ schmalbandigen Übertragungsleistungsschwellenwert in der Nachbarzelle auszuführen, um einen Übertragungsleistungswert zu erhalten, der jedem der PRBs in der Nachbarzelle entspricht; und

ein zweites Ermittlungsmodul (625), das konfiguriert ist, gemäß voreingestellter Antiinterferenzinformationen und gemäß dem Übertragungsleistungswert, der jedem der PRBs in der Nachbarzelle entspricht, einen PRB zu ermitteln, der einem erweiterten Steuerkanal der Zelle entspricht, und den PRB zu ermitteln, der dem erweiterten Steuerkanal der Zelle als ein PRB entspricht, von dem eine Planungsweise in der Zelle eingestellt werden muss,

wobei die Vorrichtung außerdem eine Einstelleinheit (63) umfasst, die konfiguriert ist, die Planungsweise des PRB in der Zelle gemäß den Planungsanzeigeinformationen des erweiterten Steuerkanals einzustellen.

4. Vorrichtung nach Anspruch 3, wobei der erweiterte Steuerkanal einen erweiterten Steuerkanal einer physischen Abwärtsübertragung und/oder einen erweiterten physischen Hybrid-ARQ-Anzeigekanal (Enhanced-Physical Hybrid ARQ Indicator CHannel E-PHICH) umfasst.

## Revendications

1. Procédé permettant une coordination d'interférences, comprenant les étapes suivantes :

recevoir des informations d'indication de planification de canal de contrôle amélioré envoyées par une cellule voisine, les informations d'indication de planification de canal de contrôle amélioré comportant des informations d'indication de planification utilisées pour indiquer des informations de puissance de transmission correspondant à chaque bloc de ressource physique, PRB, dans la cellule voisine (étape 403) ; et

déterminer, selon les informations d'indication de planification, une valeur de puissance de transmission à bande étroite relative correspondant à chaque PRB dans la cellule voisine et déterminer, selon les informations d'indication de planification, au moins un seuil de puissance de transmission à bande étroite relative (étape 404) ;

exécuter un calcul selon la valeur de puissance de transmission à bande étroite relative correspondant à chaque PRB dans la cellule voisine et ledit seuil de puissance de transmission à bande étroite relative pour obtenir une valeur de puissance de transmission correspondant à chaque PRB dans la cellule voisine ; et

déterminer, selon des informations d'anti-interférences prédéfinies et selon la valeur de puissance de transmission correspondant à chaque PRB dans la cellule voisine, un PRB correspondant à un canal de contrôle amélioré de la cellule, et déterminer le PRB correspondant au canal de contrôle amélioré de la cellule comme un PRB, dont un mode de planification doit être ajusté, dans la cellule,

ajuster le mode de planification du PRB dans la cellule selon les informations d'indication de planification de canal de contrôle amélioré (étape 405).

2. Procédé selon la revendication 1, dans lequel le canal de contrôle amélioré comprend un canal de contrôle de liaison descendante physique amélioré et/ou un canal indicateur ARQ hybride physique amélioré E-PHICH.

3. Appareil permettant une coordination d'interférences, comprenant :

une unité de réception (61), configurée pour recevoir des informations d'indication de planification de canal de contrôle amélioré envoyées par une cellule voisine, les informations d'indication de planification de canal de contrôle amélioré comportant des informations d'indication de planification, les informations d'indication de planification étant utilisées pour indiquer des informations de puissance de transmission correspondant à chaque bloc de ressource physique, PRB, dans la cellule voisine ; et

une unité d'obtention, configurée pour obtenir un PRB dans une cellule ; et

un premier module de détermination (623), configuré pour : déterminer, selon les informations d'indication de planification, une valeur de puissance de transmission à bande étroite relative correspondant à chaque PRB dans la cellule voisine et déterminer, selon les informations d'indication de planification, au moins un seuil de puissance de transmission à bande étroite relative dans la cellule voisine ;

un module de calcul (624), configuré pour exécuter un calcul selon la valeur de puissance de transmission à bande étroite relative correspondant à chaque PRB dans la cellule voisine et ledit seuil de puissance de transmission à bande étroite relative dans la cellule voisine pour obtenir une valeur de puissance de transmission correspondant à chaque PRB dans la cellule voisine ; et

un deuxième module de détermination (625), configuré pour : déterminer, selon des informations d'anti-interférences prédéfinies et selon la valeur de puissance de transmission correspondant à chaque PRB dans la cellule voisine, un PRB correspondant à un canal de contrôle amélioré de la cellule, et déterminer le PRB correspondant au canal de contrôle amélioré de la cellule comme un PRB, dont un mode de planification doit être ajusté, dans la cellule,

l'appareil comportant en outre une unité d'ajustement (63), configurée pour ajuster le mode de planification du PRB dans la cellule selon les informations d'indication de planification de canal de contrôle amélioré.

4. Appareil selon la revendication 3, dans lequel le canal de contrôle amélioré comprend un canal de contrôle de liaison descendante physique amélioré et/ou un canal indicateur ARQ hybride physique amélioré E-PHICH.

| Generate enhanced-control-channel scheduling indication information | — 101 |

↓

| Send the enhanced-control-channel scheduling indication information to a neighboring cell | — 102 |

FIG. 1

| Receive enhanced-control-channel scheduling indication information sent by a neighboring cell | — 201 |

↓

| Determine, according to the enhanced-control-channel scheduling indication information, a PRB corresponding to an enhanced control channel of a serving cell from PRBs of the serving cell | — 202 |

FIG. 2

| Generate first scheduling indication information | — 301 |

↓

| A cell A sends the first scheduling indication information to a cell B | — 302 |

↓

| The cell B receives the first scheduling indication information sent by the cell A | — 303 |

↓

| The cell B determines, according to the first scheduling indication information, a PRB, of which a scheduling manner needs to be adjusted in the cell B, from PRBs in the cell B | — 304 |

↓

| The cell B determines, according to the first scheduling indication information, a scheduling manner of a PRB corresponding to an enhanced control channel of the cell B | — 305 |

FIG. 3

A cell A generates second scheduling indication information according to an obtained internal PRB of the cell A — 401

The cell A sends the second scheduling indication information to a cell B — 402

The cell B receives the second scheduling indication information sent by the cell A — 403

The cell B determines, according to the second scheduling indication information, a PRB, of which a scheduling manner needs to be adjusted in the cell B, from PRBs in the cell B — 404

The cell B determines, according to the second scheduling indication information, a scheduling manner of a PRB corresponding to an enhanced control channel of the cell B — 405

FIG. 4

Apparatus for interference coordination

Generating unit — 51

Sending unit — 52

FIG. 5

51

Generating unit

Detecting module — 511

Determining module — 512

First generating module — 513

FIG. 6

51

Generating unit

Setting module — 514

Second generating module — 515

Third generating module — 516

FIG. 7

Apparatus for interference coordination

Receiving unit — 61

Determining unit — 62

FIG. 8

62

---

**Determining unit**

| First determining module | 621 |

| Second determining module | 622 |

FIG. 9

---

62

---

**Determining unit**

| Third determining module | 623 |

| Calculating module | 624 |

| Fourth determining module | 625 |

FIG. 10

Apparatus for interference coordination

| Receiving unit | 61 |

| Determining unit | 62 |

| Adjusting unit | 63 |

**FIG. 11**

Apparatus for interference coordination

| Processor | 71 |

| Memory | 72 |

**FIG. 12**

Apparatus for interference coordination

| Processor | 73 |

| Memory | 74 |

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011137383 A1